# EUROPÄISCHE PATENTSCHRIFT

(11) **EP 2 327 577 B1**
(45) Veröffentlichungstag und Bekanntmachung des Hinweises auf die Patenterteilung: **16.01.2013**
(21) Anmeldenummer: 10191773.0
(22) Anmeldetag: 18.11.2010
(51) Int. Cl.: B60J 7/12

(54) **Dachspitze für ein Cabrioletfahrzeug**
Roof header for a convertible vehicle
Sommet de toit pour un véhicule cabriolet

(30) Priorität: 18.11.2009 DE 102009053700
(43) Veröffentlichungstag der Anmeldung: 01.06.2011
(73) Patentinhaber: Wilhelm Karmann GmbH, 49084 Osnabrück (DE)
(72) Erfinder: Hollenbeck, Sven, 49492, Westerkappeln (DE)
(74) Vertreter: Kronthaler, Wolfgang N.K.

(56) Entgegenhaltungen:
- DE-A1- 4 001 136
- DE-U1- 20 119 840
- US-A- 5 884 964

## Beschreibung

Die Erfindung betrifft eine Dachspitze für ein Cabrioletfahrzeug, mit einem sich in Fahrzeugquerrichtung zwischen seitlichen Rahmenteilen eines Verdeckgestänges erstreckenden Mittelteil, welches beidseitig über Befestigungsmittel mit den Rahmenteilen verbindbar ist und in Fahrzeuglängsrichtung gegen einen Windschutzscheibenrahmen zur Anlage gebracht werden kann. Ferner betrifft die Erfindung ein Verfahren zur Fertigung einer solchen Dachspitze.

Die DE 201 19 840 U1 offenbart eine Verbindung zwischen Profilen eines Fahrzeugaufbaus mit einem gekrümmten Verbindungsbereich, wobei zumindest eines der Profile wenigstens eine Materialfahne zur Ausbildung der Verbindung zwischen den Profilen aufweist. Die Profile stellen ein Dachspitzenteil und seitliche Rahmenprofile eines Verdeckaufbaus für ein Cabrioletfahrzeug mit einem faltbaren Verdeck dar, wobei das Dachspitzenteil mit einem vorderen Bereich der seitlichen Rahmenprofile unter Ausbildung eines gekrümmten Verbindungsbereichs fest verbunden ist. Die wenigstens eine Materialfahne ist an dem Dachspitzenteil ausgebildet und erstreckt über das vordere Ende des seitlichen Rahmenprofiles hinaus in Richtung eines Windschutzscheibenrahmens.

Bei Kleinserien von Fahrzeugen stellt das Herstellen von Werkzeugen einen großen Kostenfaktor dar, sodass die Fertigung des Dachspitzenteils relativ teuer ist.

Ausgehend hiervon liegt der Erfindung die Aufgabe zugrunde, bei Kleinserien von Fahrzeugen die Werkzeugkosten für die Fertigung einer Dachspitze reduzieren zu können.

Diese Aufgabe wird erfindungsgemäß mit einer Dachspitze nach Anspruch 1 und mit einem Verfahren nach Anspruch 7 gelöst.

Die erfindungsgemäße Dachspitze für ein Cabrioletfahrzeug umfasst ein im montierten Zustand der Dachspitze sich in Fahrzeugquerrichtung zwischen seitlichen Rahmenteilen eines Verdeckgestänges erstreckendes Mittelteil, welches beidseitig über Befestigungsmittel mit den Rahmenteilen verbindbar ist und in Fahrzeuglängsrichtung gegen einen Windschutzscheibenrahmen zur Anlage gebracht werden kann, wobei das in Fahrzeuglängsrichtung mit einer Überlänge vorgefertigte Mittelteil im mit den Rahmenteilen verbundenen Zustand zum Windschutzscheibenrahmen passend kürzbar ist.

Es wurde erkannt, dass bei unterschiedlichen Cabrioletfahrzeugtypen desselben Herstellers die Abmessungen der Dachspitzen in Fahrzeugquerrichtung häufig relativ ähnlich sind. Ferner weisen die Dachspitzen in ihrem in Fahrzeugquerrichtung mittleren Bereich, abgesehen von der dem Windschutzscheibenrahmen zugewandten Anschlussseite, häufig dieselbe oder annähernd dieselbe Form auf.

Durch das erfindungsgemäße Vorfertigen des Mittelteils mit einer Überlänge in Fahrzeuglängsrichtung ist es möglich, das Mittelteil für unterschiedliche Fahrzeugtypen einsetzen zu können. Somit ist für die unterschiedlichen Fahrzeugtypen dasselbe Werkzeug zur Herstellung des Mittelteils verwendbar, sodass die Werkzeugkosten reduziert werden können. Nach der Vorfertigung des Mittelteils mit Überlange wird dieses an den jeweiligen Fahrzeugtyp durch Kürzen angepasst. Zwar entstehen durch das Kürzen zusätzlich Fertigungskosten, diese sind bei Kleinserien aber deutlich geringer als die Herstellungskosten für ein neues Werkzeug zur Herstellung einer Dachspitze.

Das vorgefertigte Mittelteil weist insbesondere an seiner Anschlussseite zum Windschutzscheibenrahmen hin die Überlänge auf. Durch das Kürzen wird somit das vorgefertigte Mittelteil an die Geometrie des Windschutzscheibenrahmens angepasst. Das Kürzen erfolgt z.B. durch Laserschneiden. Vorzugsweise sind oder werden, abgesehen von der Anschlussseite zum Windschutzscheibenrahmen hin, die übrigen Seiten des vorgefertigten Mittelteils bereits zur Montage passend ausgebildet und können somit unbearbeitet bleiben. Das Kürzen des vorgefertigten Mittelteils erfolgt insbesondere nur an der Anschlussseite zum Windschutzscheibenrahmen hin.

Im montierten Zustand der Dachspitze ist die Breite des Mittelteils bevorzugt kleiner als der Abstand zwischen den Rahmenteilen, wobei die seitlichen Abstände zwischen dem Mittelteil und den Rahmenteilen durch die Befestigungsmittel vollständig oder zumindest teilweise überbrückt sind, die insbesondere als separate Bauteile gefertigt sind. Somit ist es möglich, zum Überbrücken der Abstände zwischen dem Mittelteil und den Rahmenteilen die Befestigungsmittel an geeigneten Stellen an dem Mittelteil zu befestigen. Dadurch ist das Mittelteil für unterschiedliche Fahrzeugbreiten verwendbar. Auch dies begünstigt die Einsetzbarkeit des Mittelteils für unterschiedliche Fahrzeugtypen, die in ihrer Breite geringfügig variieren.

Zusätzlich sind im montierten Zustand der Dachspitze die seitlichen Abstände zwischen dem Mittelteil und den Rahmenteilen bevorzugt durch Adapterstücke überbrückt, die insbesondere als separate Bauteile gefertigt sind und vorzugsweise die Befestigungsmittel abdecken. Die Adapterstücke dienen somit als Abdeckung der seitlichen Abstände zwischen dem Mittelteil und den Rahmenteilen. Insbesondere verleihen die Adapterstücke der Dachspitze in ihren seitlichen Randbereichen eine gewünschte Form. Zwar sind die Adapterstücke an den jeweiligen Fahrzeugtyp anzupassen, ein Werkzeug zur Herstellung der Adapterstücke ist aber deutlich kostengünstiger als ein Werkzeug zur Herstellung einer Dachspitze. Die Adapterstücke bestehen z.B. aus Kunststoff, aus Metall oder aus einer Kombination beider Werkstoffe.

Die Befestigungsmittel sind vorzugsweise stoffschlüssig mit dem Mittelteil verbunden, insbesondere mit diesem verschweißt. Ferner sind die Befestigungsmittel bevorzugt lösbar mit den Rahmenteilen verbindbar, insbesondere mit den Rahmenteilen verschraubbar. Vorzugsweise sind die Befestigungsmittel jeweils als Winkelstück ausgebildet. Insbesondere bestehen die Befestigungsmittel aus Metall.

Bevorzugt sind die Befestigungsmittel mit den Rahmenteilen unter Zwischenschaltung einer oder mehrerer Distanzstücke verbunden, sodass Toleranzen ausgleichbar sind, die beim Befestigen der Befestigungsmittel an dem Mittelteil auftreten können. Die im montierten Zustand der Dachspitze seitlichen Abstände zwischen dem Mittelteil und den Rahmenteilen sind somit durch die Befestigungsmittel und durch das oder die Distanzstücke überbrückt. Ist kein Distanzstück erforderlich, so sind die seitlichen Abstände zwischen dem Mittelteil und den Rahmenteilen durch die Befestigungsmittel überbrückt. Die Distanzstücke können z.B. jeweils als Unterlegscheibe oder dergleichen ausgebildet sein. Da der Befestigungsort der Befestigungsmittel an dem Mittelteil an den jeweiligen Fahrzeugtyp anpassbar ist und ggf. Distanz-stücke verwendet werden, sind für unterschiedliche Fahrzeugtypen gleiche Befestigungsmittel einsetzbar. Auch hierdurch können die Kosten reduziert werden.

Im montierten Zustand der Dachspitze sitzt das Mittelteil in Querrichtung bevorzugt mittig zwischen den Rahmenteilen. Vorzugsweise ist das Mittelteil zumindest bereichsweise gekrümmt ausgebildet. Gemäß einer Ausgestaltung der Erfindung ist das Mittelteil als Blechteil, als Aluminiumdruckgussteil und/oder als zusammengesetztes Strangpressprofil gefertigt. Insbesondere besteht das Mittelteil aus Metall.

Das Verdeckgestänge ist bevorzugt Teil eines Verdecks, insbesondere eines Faltverdecks, welches vorzugsweise mit Stoff bespannt ist. Die erfindungsgemäße Dachspitze wird bevorzugt für ein Softtop-Verdeck eingesetzt. Das Verdeck deckt in einem geschlossenen Zustand insbesondere einen Insassenraum des Fahrzeugs ab und ist in einen geöffneten Zustand überführbar, in welchem das Verdeck insbesondere in einem Verdeckkasten abgelegt ist. Das Verdeckgestänge ist bevorzugt bewegbar an einer Karosserie des Fahrzeugs gelagert. Die seitlichen Rahmenteile erstrecken sich im geschlossenen Zustand des Verdecks insbesondere in oder im Wesentlichen in Fahrzeuglängsrichtung. Das Cabrioletfahrzeug ist bevorzugt ein Kraftfahrzeug.

Die erfindungsgemäße Dachspitze umfasst bevorzugt ein universell einsetzbares Mittelteil, welches für unterschiedliche Typen oder Derivate des gleichen Basisfahrzeugs einsetzbar ist. Das Mittelteil ist z.B. in Blechschalenbauweise als gebogenes Strangpressteil oder als Gussteil ausgebildet. Die Ausgangsgeometrie des Mittelteils weist an der Anschlussseite zum Windschutzscheibenrahmen ein Übermaß auf, wobei zur Anpassung an die Windschutzscheibengeometrie des jeweiligen Fahrzeugtyps die Anschlussseite, z.B. durch Laserschneiden, bearbeitet wird. Die übrigen Seiten des Mittelteils bleiben vorzugsweise unbearbeitet. Insbesondere ist eine Bearbeitung der Oberseite des Mittelteils nicht erforderlich, da die Wölbung der vorderen Dachbereiche in

Fahrzeugquerrichtung bei den unterschiedlichen Typen (Derivaten), für die das Mittelteil verwendbar ist, vorzugsweise gleich ist. Die seitlichen Verbindungen zu den Rahmenteilen auf der linken und auf der rechten Seite des Mittelteils werden bevorzugt über Befestigungsmittel und Adapterstücke hergestellt. Die Adapterstücke können beispielsweise aus Kunststoff bestehen und werden bevorzugt für den jeweiligen Fahrzeugtyp angefertigt.

Der Vorteil der Erfindung liegt insbesondere in der Einsparung von Betriebsmittelkosten, die sich insbesondere bei kleinen Stückzahlen relativ stark auf die Kosten des jeweiligen Fahrzeugtyps auswirken. Die Anfertigung mehrerer Werkzeugsätze für die kompletten Dachspitzen unterschiedlicher Fahrzeugtypen ist erheblich teurer als nur die Herstellung von relativ kleinen Werkzeugen für die seitlichen Adapterstrücke. Auf diese Weise können Werkzeugkosten für das Mittelteil auf mehrere Fahrzeugtypen umgelegt werden.

Die Erfindung betrifft ferner ein Verfahren zur Fertigung einer Dachspitze für ein Cabrioletfahrzeug, wobei die Daschpitze ein im montiesten Zustand in Fahrzeugquerrichtung zwischen seitlichen Rahmenteilen eines Verdeckgestänges erstreckendes und in Fahrzeuglängsrichtung gegen einen Windschutzscheibenrahmen zur Anlage gebrachtes oder bringbares Mittelteil umfasst, welches beidseitig über Befestigungsmittel mit den Rahmenteilen verbunden wird, und wobei das Mittelteil in Fahrzeuglängsrichtung mit einer überlänge vorgefertigt und vor dem Verbinden mit den Rahmenteilen zum Windschutzscheibenrahmen passend gekürzt wird.

Die mittels des Verfahrens gefertigte Dachspitze ist insbesondere eine erfindungsgemäße Dachspitze und kann gemäß allen in diesem Zusammenhang beschriebenen Ausgestaltungen weitergebildet sein.

Bevorzugt wird das Mittelteil mit einer kleineren Breite als der Abstand zwischen den Rahmenteilten gefertigt, wobei die Befestigungsmittel derart als separate Bauteile gefertigt werden, dass die seitlichen Abstände zwischen dem Mittelteil und dem Rahmenteil im montierten Zustand der Dachspitze durch die Befestigungsmittel ganz oder zumindest teilweise überbrückt werden. Gemäß einer Ausgestaltung der Erfindung sind die Befestigungsmittel mit den Rahmenteilen unter Zwischenschaltung einer oder mehrerer Distanz-stücke verbindbar.

Zusätzlich können die Befestigungsmittel abdeckende Adapterstücke derart als separate Bauteile gefertigt werden, dass die seitlichen Abstände zwischen dem Mittelteil und den Rahmenteilen im montierten Zustand der Dachspitze bevorzugt durch Adapterstücke überbrückt werden. Das Mittelteil wird in Querrichtung bevorzugt mittig zwischen den Rahmenteilen anordenbar ausgebildet.

Die im Zusammenhang mit dem Verfahren beschriebenen Befestigungsmittel, Adapterstücke und/oder Distanzstücke können gemäß allen im Zusammenhang mit der erfindungsgemäßen Dachspitze beschriebenen Ausgestaltungen weitergebildet sein.

Die Erfindung wird nachfolgend anhand einer bevorzugten Ausführungsform unter Bezugnahme auf die Zeichnung beschrieben. In der Zeichnung zeigen:
- Fig. 1: eine perspektivische Ansicht eines Cabrioletfahrzeugs mit geschlossenem Verdeck,
- Fig. 2: eine perspektivische Ansicht eines eine Dachspitze gemäß einer Ausführungsform der Erfindung umfassenden Verdeckgestänges,
- Fig. 3: eine perspektivische Unteransicht der Dachspize und
- Fig. 4: eine Schnittansicht durch die Dachspitze entlang der aus Fig. 2 ersichtlichen Schnittlinie A-A.

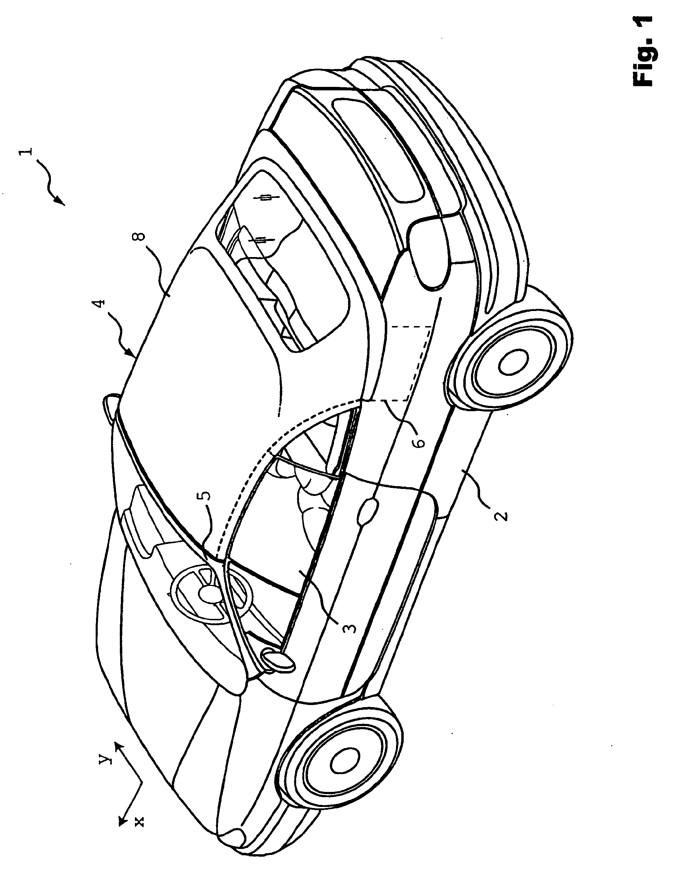

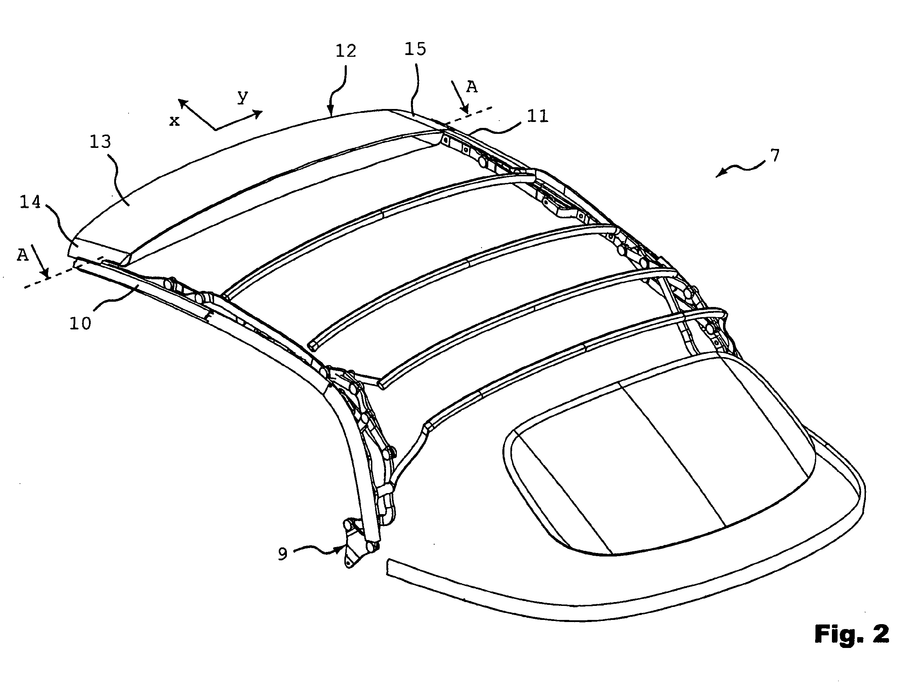

Aus Fig. 1 ist eine perspektivische Ansicht eines Cabrioletfahrzeugs 1 ersichtlich, welches eine Karosserie 2 und ein einen Insassenraum 3 abdeckendes Verdeck 4 aufweist, welches an einen Windschutzscheibenrahmen 5 angrenzt. Das im geschlossenen Zustand dargestellte Verdeck 4 kann geöffnet und in einem schematisch angedeuteten Verdeckkasten 6 im Heck des Fahrzeugs 1 abgelegt werden. Das Verdeck 4 umfasst ein Verdeckgestänge 7 (siehe Fig. 2), welches mit einem Stoff 8 bespannt ist.

Aus Fig. 2 ist eine perspektivische Ansicht des Verdeckgestänges 7 ersichtlich, wobei die Stoffbespannung weggelassen wurde. Das Gestänge 7 ist mittels Lager 9 an der Karosserie 2 bewegbar gelagert und weist an seinem vorderen Ende zwei Rahmenteile 10 und 11 auf, an denen eine sich zwischen diesen in Fahrzeugquerrichtung y erstreckende Dachspitze 12 befestigt ist, die im geschlossenen Zustand des Verdecks 4 an dem Windschutzscheibenrahmen 5 anliegt. Die Dachspitze 12 umfasst ein Mittelteil 13 und zwei Adapterstücke 14 und 15, zwischen denen das Mittelteil 13 angeordnet ist.

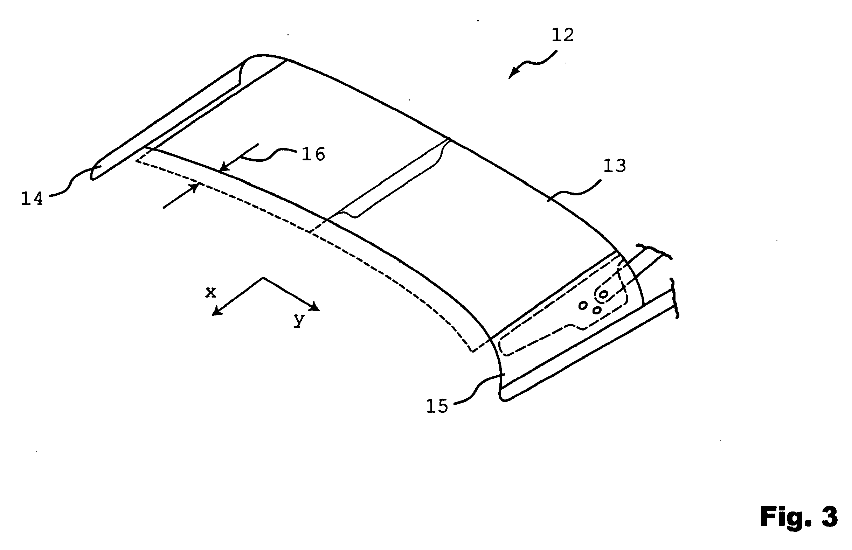

Aus Fig. 3 ist eine teilweise perspektivische Unteransicht der Dachspitze 12 ersichtlich, deren Mittelteil 13 vor der Montage an das Verdeckgestänge 7 an seiner dem Windschutzscheibenrahmen 5 zugewandten Anschlussseite mit einer Überlänge 16 in Fahrzeuglängsrichtung x vorgefertigt ist. Die lediglich schematisch angedeutete Überlänge 16 ist im montierten Zustand des Mittelteils 13 durch Kürzen, z.B. mittels Laserschneiden, an die Kontur des Windschutzscheibenrahmens 5 angepasst.

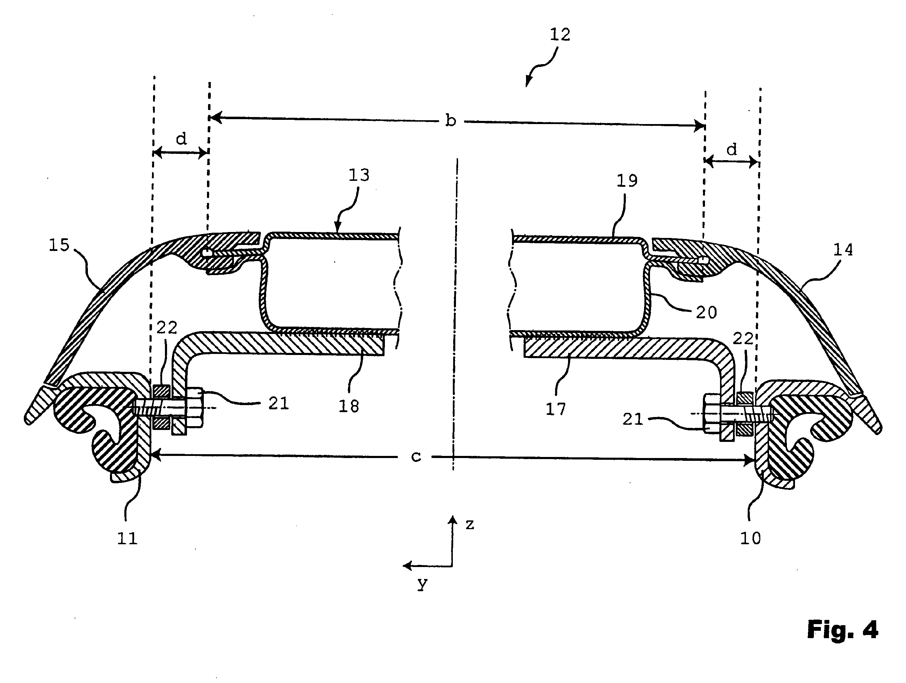

Aus Fig. 4 ist eine teilweise Schnittansicht der Dachspitze 12 entlang der in Fig. 2 gezeigten Schnittlinie A-A ersichtlich, wobei das Mittelteil 13 über als Winkelstücke ausgebildete Befestigungsmittel 17 und 18 an den Rahmenteilen 10 und 11 befestigt ist. Das Mittelteil 13 ist aus einem oberen Blech 19 und aus einem unteren Blech 20, welches an dem Blech 19 befestigt ist, zusammengesetzt und weist in Fahrzeugquerrichtung y eine Breite b auf, die kleiner als der Abstand c zwischen den beiden Rahmenteilen 10 und 11 in Fahrzeugquerrichtung y ist.

Die Befestigungsmittel 17 und 18 sind jeweils an dem unteren Blech 20 angeschweißt und jeweils über eine Schraube 21 mit dem jeweiligen Rahmenteil 10 bzw. 11 fest verbunden. Zwischen den Befestigungsmitteln 17 und 18 und den Rahmenteilen 10 und 11 ist jeweils ein Distanzstück 22 angeordnet, welches von der jeweiligen Schraube 21 durchgriffen ist.

Die Adapterstücke 14 und 15 erstrecken sich von dem Mittelteil 13 seitlich nach außen und überbrücken nicht nur die seitlichen Abstände d zwischen dem Mittelteil 13 und den Rahmenteilen 10 und 11, sondern decken auch diese teilweise ab. Die Befestigungsmittel 17 und 18 werden somit durch die Adapterstücke 14 und 15 abgedeckt. Ferner ist in Fig. 4 die Fahrzeughochrichtung z dargestellt.

## Patentansprüche

1. Dachspitze (12) für ein Cabrioletfahrzeug, mit einem im montierten Zustand der Dachspitze (12) sich in Fahrzeugquerrichtung (y) zwischen seitlichen Rahmenteilen (10, 11) eines Verdeckgestänges (7) erstreckenden Mittelteil (13), welches beidseitig über Befestigungsmittel (17, 18) mit den Rahmenteilen (10, 11) verbindbar ist und in Fahrzeuglängsrichtung (x) gegen einen Windschutzscheibenrahmen (5) zur Anlage gebracht werden kann,
**dadurch gekennzeichnet,**
**dass** das in Fahrzeuglängsrichtung (x) mit einer Oberlänge (16) vorgefertigte Mittelteil (13) im mit den Rahmenteilen (10, 11) verbundenen Zustand zum Windschutzscheibenrahmen (5) passend kürzbar ist.

2. Dachspitze nach Anspruch 1,
**dadurch gekennzeichnet,**
**dass** im montierten Zustand der Dachspitze (12) die in Fahrtengquerichtung definierte Breite (b) des Mittelteils (13) kleiner als der Abstand (c) zwischen den Rahmenteilen (10, 11) ist und die seitlichen Abstände (d) zwischen dem Mittelteil (13) und den Rahmenteilen (10, 11) durch die als separate Bauteile gefertigten Befestigungsmittel (17, 18) zumindest teilweise überbrückt sind.

3. Dachspitze nach Anspruch 2,
**dadurch gekennzeichnet,**
**dass** im montierten Zustand der Dachspitze (12) die seitlichen Abstände (d) zwischen dem Mittelteil (13) und den Rahmenteilen (10, 11) durch als separate Bauteile gefertigte und die Befestigungsmittel (17, 18) abdeckende Adapterstücke (14, 15) überbrückt sind.

4. Dachspitze nach einem der vorangehenden Ansprüche,
**dadurch gekennzeichnet,**
**dass** die Befestigungsmittel (17, 18) mit den Rahmenteilen (10, 11) verschraubbar und an dem Mittelteil (13) angeschweißt sind.

5. Dachspitze nach einem der vorangehenden Ansprüche,
**dadurch gekennzeichnet,**
**dass** die Befestigungsmittel (17, 18) mit den Rahmenteilen (10, 11) unter Zwischenschaltung einer oder mehrerer Distanzstücke (22) verbindbar sind.

6. Dachspitze nach einem der vorangehenden Ansprüche,
**dadurch gekennzeichnet,**
**dass** im montierten Zustand der Dachspitze (12) das Mittelteil (13) in Fahrzeugquerrichtung (y) mittig zwischen den Rahmenteilen (10, 11) sitzt.

7. Verfahren zur Fertigung einer Dachspitze für ein Cabrioletfahrzeug, wobei die Dachspitze
ein im montierten austand sich in Fahrzeugquerrichtung (y) zwischen seitlichen Rahmenteilen (10, 11) eines Verdeckgestänges (7) erstreckendes und in Fahrzeuglängsrichtung (x) gegen einen Windschutzscheibenrahmen (5) zur Anlage gebrachtes oder bringbares Mittelteil (13) umfasst, welches beidseitig über Befestigungsmittel (17, 18) mit den Rahmenteilen (10, 11) verbunden wird,
**dadurch gekennzeichnet,**
**dass** das Mittelteil (13) in Fahrzeuglängsrichtung (x) mit einer Überlänge (16) vorgefertigt und vor dem Verbinden mit den Rahmenteilen (10, 11) zum Windschutzscheibenrahmen (5) passend gekürzt wird.

8. Verfahren nach Anspruch 7,
**dadurch gekennzeichnet,**
**dass** das Mittelteil (13) mit einer in Fahrzengquerrichtung definierten kleineren Breite (b) als der Abstand (c) zwischen den Rahmenteilen (10, 11) gefertigt wird, wobei die Befestigungsmittel (17, 18) derart als separate Bauteile gefertigt werden, dass die seitlichen Abstände (d) zwischen dem Mittelteil (13) und den Rahmenteilen (10, 11) im montierten Zustand der Dachspitze (12) durch die Befestigungsmittel (17, 18) zumindest teilweise überbrückt werden.

9. Verfahren nach Anspruch 8,
**dadurch gekennzeichnet,**
**dass** die Befestigungsmittel (17, 18) abdeckende Adapterstücke (14, 15) derart als separate Bauteile gefertigt werden, dass die seitlichen Abstände (d) zwischen dem Mittelteil (13) und den Rahmenteilen (10, 11) im montierten Zustand der Dachspitze (12) durch die Adapterstücke (14, 15) überbrückt werden.

10. Verfahren nach einem der Ansprüche 7 bis 9,
**dadurch gekennzeichnet,**
**dass** das Mittelteil (13) in Fahrzeugquerrichtung (y) mittig zwischen den Rahmenteilen (10, 11) anordenbar ist.

## Claims

1. A roof header (12) for a convertible vehicle, comprising a central part (13) which extends in the transverse vehicle direction (y) between lateral frame parts (10, 11) of a hood linkage (7) in the mounted condition of the roof header (12), which central part (13) can be connected on both sides to the frame parts (10, 11) by fastening means (17, 18) and can be made to contact a windscreen frame (5) in the longitudinal vehicle direction (x),
**characterised in that**
the central part (13), which is pre-fabricated with an excessive length (16) in the longitudinal vehicle direction (x), can be shortened, when connected to the frame parts (10, 11), to fit the windscreen frame (5).

2. The roof header according to claim 1, **characterised in that**, in the mounted condition of the roof header (12), the central part (13) has a width (b), defined in the transverse vehicle direction, of less than the distance (c) between the frame parts (10, 11), and the lateral distances (d) between the central part (13) and the frame parts (10, 11) are bridged at least partly by the fastening means (17, 18) manufactured as separate components.

3. The roof header according to claim 2, **characterised in that**, in the mounted condition of the roof header (12), the lateral distances (d) between the central part (13) and the frame parts (10, 11) are bridged by adapter pieces (14, 15), manufactured as separate components and bridging the fastening means (17, 18).

4. The roof header according to any one of the preceding claims, **characterised in that** the fastening means (17, 18) can be screw-connected to the frame parts (10, 11) and are welded to the central part (13).

5. The roof header according to any one of the preceding claims, **characterised in that** the fastening means (17, 18) can be connected to the frame parts (10, 11) with interposition of one or more spacers (22).

6. The roof header according to any one of the preceding claims, **characterised in that**, in the mounted condition of the roof header (12), the central part (13) is disposed centrally between the frame parts (10, 11) in the transverse vehicle direction (y).

7. A method for manufacturing a roof header for a convertible vehicle, wherein said roof header comprises
a central part (13) which, in the mounted condition, extends in the transverse vehicle direction (y) between lateral frame parts (10, 11) of a hood linkage (7) and is made or can be made to contact a windscreen frame (5) in the longitudinal vehicle direction (x), said central part (13) being connected on both sides to the frame parts (10, 11) by fastening means (17, 18),
**characterised in that**
the central part (13) is pre-fabricated with an excessive length (16) in the longitudinal vehicle direction (x) and is shortened to fit the windscreen frame (5) before being connected to the frame parts (10, 11).

8. The method according to claim 7, **characterised in that** the central part (13) is manufactured to have a width (b), defined in the transverse vehicle direction, of less than the distance (c) between the frame parts (10, 11), the fastening means (17, 18) being manufactured as separate components such that the lateral distances (d) between the central part (13) and the frame parts (10, 11) are bridged at least partly by the fastening means (17, 18) in the mounted condition of the roof header (12).

9. The method according to claim 8, **characterised in that** adapter pieces (14, 15) covering the fastening means (17, 18) are manufactured as separate components such that the lateral distances (d) between the central part (13) and the frame parts (10, 11) are bridged by the adapter pieces (14, 15) in the mounted condition of the roof header (12).

10. The method according to any one of claims 7 to 9, **characterised in that** the central part (13) can be disposed centrally between the frame parts (10, 11) in the transverse vehicle direction (y).

## Revendications

1. Sommet de toit (12) pour un véhicule cabriolet, comprenant une partie centrale (13) qui s'étend en direction transversale du véhicule (y) entre des éléments de cadre latéraux (10, 11) d'une tringlerie de capote (7) en condition montée du sommet de toit (12), cette partie centrale (13) pouvant être reliée sur ses deux côtés avec les éléments de cadre (10, 11) par des moyens de fixage (17, 18) et pouvant être mise en contact avec un cadre de pare-brise (5) en direction longitudinale du véhicule (x),
**caractérisé en ce que**
la partie centrale (13), qui est préfabriquée de manière à présenter une longueur excessive (16) en direction longitudinale du véhicule (x), peut être raccourcie, lors de son reliage avec les éléments de cadre (10, 11), pour s'adapter au cadre de pare-brise (5).

2. Sommet de toit selon la revendication 1, **caractérisé en ce qu'**en condition montée du sommet de toit (12), la partie centrale (13) présente une largeur (b) définie en direction transversale du véhicule qui est inférieure à la distance (c) entre les éléments de cadre (10, 11), et les distances latérales (d) entre la partie centrale (13) et les éléments de cadre (10, 11) sont couvertes au moins partiellement par les moyens de fixage (17, 18) fabriqués en tant que composants séparés.

3. Sommet de toit selon la revendication 2, **caractérisé en ce qu'**en condition montée du sommet de toit (12), les distances latérales (d) entre la partie centrale (13) et les éléments de cadre (10, 11) sont couvertes par des pièces adaptatrices (14, 15), fabriquées en tant que composants séparés et couvrant les moyens de fixage (17, 18).

4. Sommet de toit selon l'une quelconque des revendications précédentes, **caractérisé en ce que** les moyens de fixage (17, 18) peuvent être vissés dans les éléments de cadre (10, 11) et sont soudés à la partie centrale (13).

5. Sommet de toit selon l'une quelconque des revendications précédentes, **caractérisé en ce que** les moyens de fixage (17, 18) peuvent être reliés aux éléments de cadre (10, 11) avec interposition d'un ou plusieurs entretoises (22).

6. Sommet de toit selon l'une quelconque des revendications précédentes, **caractérisé en ce qu'**en condition montée du sommet de toit (12), la partie centrale (13) est disposée centralement entre les éléments de cadre (10, 11) en direction transversale du véhicule (y).

7. Procédé de fabrication d'un sommet de toit pour un véhicule cabriolet, ledit sommet de toit comprenant
une partie centrale (13) qui s'étend, en condition montée, en direction transversale du véhicule (y) entre des éléments de cadre latéraux (10, 11) d'une tringlerie de capote (7) et qui est mis en contact ou que l'on peut mettre en contact avec un cadre de pare-brise (5) en direction longitudinale du véhicule (x), ladite partie centrale (13) étant reliée sur ses deux côtés avec les éléments de cadre (10, 11) par des moyens de fixage (17, 18),
**caractérisé en ce que**
la partie centrale (13) est préfabriquée de manière à présenter une longueur excessive (16) en direction longitudinale du véhicule (x) et est raccourcie pour s'adapter au cadre de pare-brise (5) avant d'être reliée aux éléments de cadre (10, 11).

8. Procédé selon la revendication 7, **caractérisé en ce que** la partie centrale (13) est fabriquée de manière à présenter une largeur (b) définie en direction transversale du véhicule qui est inférieure à la distance (c) entre les éléments de cadre (10, 11), les moyens de fixage (17, 18) étant fabriqués en tant que composants séparés de manière à ce que les distances latérales (d) entre la partie centrale (13) et les éléments de cadre (10, 11) soient couvertes au moins partiellement par les moyens de fixage (17, 18) en condition montée du sommet de toit (12).

9. Procédé selon la revendication 8, **caractérisé en ce que** des pièces adaptatrices (14, 15) couvrant les moyens de fixage (17, 18) sont fabriquées en tant que composants séparés de manière à ce que les distances latérales (d) entre la partie centrale (13) et les éléments de cadre (10, 11) soient couvertes par les pièces adaptatrices (14, 15) en condition montée du sommet de toit (12).

10. Procédé selon l'une quelconque des revendications 7 à 9, **caractérisé en ce que** la partie centrale (13) peut être disposée centralement entre les éléments de cadre (10, 11) en direction transversale du véhicule (y).
